# EUROPEAN PATENT APPLICATION

(11) **EP 3 738 916 A1**
(43) Date of publication of application: **18.11.2020**
(21) Application number: 19174630.4
(22) Date of filing: 15.05.2019
(51) Int. Cl.: B66B 9/06

(54) **INCLINED ELEVATOR AND METHOD FOR MANUFACTURING THEREOF**

(71) Applicant: KONE Corporation, 00330 Helsinki (FI)
(72) Inventor: RATIA, Jouni, 00330 HELSINKI (FI); NÄSI, Lauri, 00330 HELSINKI (FI)
(74) Representative: Berggren Oy, Helsinki & Oulu

(57) **Abstract**

An inclined elevator (100) and a method for manufacturing thereof are presented. The elevator (100) comprises a support structure (5) defining an inclined channel (20) with landing entrances (22). The elevator comprises a longitudinal stator beam (12; 12A, 12B) attached to the inclined channel (20) to define an inclined movement path (21). The elevator (100) comprises a car (10) comprising a battery (16) and a drive unit (13; 13A, 13B) and configured to be moved between the landing entrances (22). The elevator also comprises a mover (14) coupled to the car (10). The mover (14) comprises a winding (52) and is arranged to face at least on side face (40) to generate a travelling magnetic field along the side face(s) (40) for moving the mover (14).

## Description

### FIELD OF THE INVENTION

The present invention relates in general to inclined elevators. In particular, however not exclusively, the present invention concerns inclined elevators comprising an electric linear motor.

### BACKGROUND

Inclined elevator are being used, for example, in subway stations to replace escalators or moving walks. Inclined elevators can transfer people between two levels such as the escalators do, however, unlike escalators, the inclined elevators can have intermediate stations also.

In the known solutions, however, the car is being moved by electrical motors arranged rotate a pulley to which the elevator car is coupled by a rope or belt. Thus, the elevators suffer from high losses and low energy efficiency due to, for example, friction.

### SUMMARY

An objective of the present invention is to provide an inclined elevator and a method for manufacturing an inclined elevator. Another objective of the present invention is to provide an inclined elevator that improves the energy efficiency with respect to known solutions.

The objectives of the invention are reached by an inclined elevator and a method for manufacturing an inclined elevator as defined by the respective independent claims.

According to a first aspect, an inclined elevator is provided. The inclined elevator comprises a support structure defining an inclined channel, such as an inclined shaft in a building, with landing entrances. The inclined elevator also comprises a longitudinal stator beam attached at least to a first end portion of the inclined channel, such as to the bottom, to define an inclined movement path along the inclined channel. Furthermore, the inclined elevator comprises a car configured to be moved bidirectionally along the inclined channel between the landing entrances, wherein the car comprises a battery and a drive unit. Still further, the inclined elevator comprises a mover coupled to the car and adapted to move along the longitudinal stator beam, wherein the mover comprises at least one winding, such as a three-phase winding, to generate a travelling magnetic field along at least one side face of the longitudinal stator beam for moving the mover along the longitudinal stator beam. Furthermore, the drive unit is configured to supply electrical power from the battery to the mover.

In an embodiment, the windings of the mover may be provided with an air core. In an alternative embodiment, the windings of the mover may be provided with a ferromagnetic core.

In an embodiment, the stator beam may comprise ferromagnetic teeth. In another embodiment, the stator beam may comprise permanent magnets.

In various embodiments, the longitudinal stator beam may have at least two side faces extending in a longitudinal direction of the longitudinal stator beam and comprising ferromagnetic teeth. Furthermore, the mover may comprise at least two counter faces arranged to face the at least two side faces of the longitudinal stator beam, wherein each one of the counter faces may comprise at least one permanent magnet and the at least one winding, such as a three-phase winding, to generate a travelling magnetic field along the side faces of the longitudinal stator beam for moving the mover along the longitudinal stator beam.

In various embodiments, the longitudinal stator beam may have four side faces extending in the longitudinal direction of the longitudinal stator beam and comprising ferromagnetic teeth, and the mover may comprise four counter faces arranged to face the four side faces of the longitudinal stator beam, wherein each one of the counter faces comprises at least one permanent magnet and at least one winding, such as a three-phase winding, to generate a travelling magnetic field along the side faces of the longitudinal stator beam for moving the mover along the longitudinal stator beam.

In various embodiments, the inclined elevator may comprise two parallel stator beams attached at least to the first end portion of the inclined channel, and two movers attached to the car, wherein the two movers are adapted to move along the two stator beams, respectively.

In various embodiments, the inclined elevator may comprise a balance weight or counterweight coupled to the car for balancing the car. The balance weight or counterweight may be arranged to be absolutely or effectively in a range of 40% to 50% of a nominal load of the car.

In various embodiments, the longitudinal stator beam or beams may be arranged in an angle of 10-45 relative to a horizontal direction.

In various embodiments, the mover or the movers may be coupled to a car sling for moving the car.

According to a second aspect, a method for manufacturing an inclined elevator is provided. The method comprises:
- providing a longitudinal stator beam, optionally, having at least two side faces extending in a longitudinal direction of the longitudinal stator beam and comprising ferromagnetic teeth,
- providing a mover comprising at least one winding, such as a three-phase winding, and adapted to move along the longitudinal stator beam, the mover optionally further comprising at least two counter faces, wherein each one of the counter faces comprises at least one permanent magnet,
- providing a car with a battery and a drive unit,
- attaching the longitudinal stator beam at least to a first end portion of an inclined channel with landing entrances defined by a support structure to define an inclined movement path along the inclined channel,
- coupling the mover to the car,
- arranging the drive unit to supply electrical power from the battery to the mover, and
- configuring the mover to generate a travelling magnetic field along at least one side face of the longitudinal stator beam for moving the mover along the longitudinal stator beam.

The present invention provides an inclined elevator and a method for manufacturing an inclined elevator. The present invention provides advantages over known solutions such that when the electric linear motor is operated by feeding current to the windings of the mover, it is possible to control movement of the mover along the stator beam as well as to generate an air gap between the stator and the mover, such that mover levitates around the stator beam. These kinds of linear motors are energy-efficient. This efficiency is even greater when levitation is used, because friction losses are smaller. One further advantage of the invention is that the inclined elevator does not need a separate machine room for the drive unit, hoisting machine and elevator electrification.

Various other advantages will become clear to a skilled person based on the following detailed description.

The expression "a number of" may herein refer to any positive integer starting from one (1).

The expression "a plurality of" may refer to any positive integer starting from two (2), respectively.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an inclined elevator according to an embodiment of the present invention.
Figure 2 illustrates schematically an inclined elevator according to an embodiment of the present invention.
Figure 3 illustrates schematically a mover and a longitudinal stator beam according to an embodiment of the present invention as a cross-sectional view.
Figure 4 illustrates schematically movers and longitudinal stator beams according to an embodiment of the present invention as a cross-sectional view.
Figure 5 illustrates schematically a mover and a longitudinal stator beam according to an embodiment of the present invention as a cross-sectional view.
Figure 6 illustrates schematically a mover and a longitudinal stator beam according to an embodiment of the present invention as a cross-sectional view.
Figure 7 illustrates schematically a control unit according to an embodiment of the present invention.
Figure 8 illustrates a flow diagram of a method according to an embodiment of the present invention.

### DETAILED DESCRIPTION OF SOME EMBODIMENTS

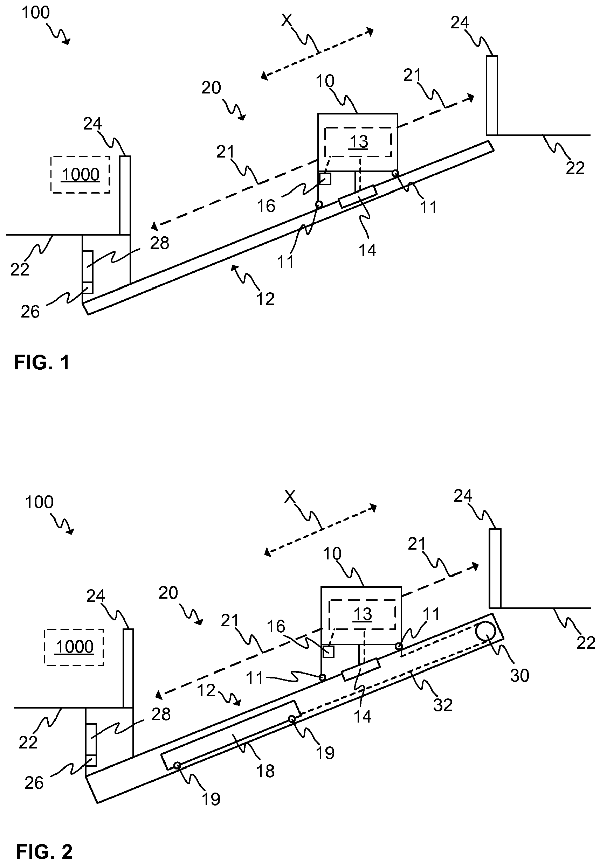

Figure 1 illustrates schematically an inclined elevator 100 according to an embodiment of the present invention. The inclined elevator 100 may comprise a support structure defining an inclined channel 20, such as an inclined shaft in a building, with landing entrances 22. The landing entrances 22 may preferably comprise landing doors 24. Furthermore, the inclined elevator 100 may comprise a longitudinal stator beam 12 attached at least to a first end portion, such as the bottom of the channel 20, of the inclined channel 20 to define an inclined movement path 21 along the inclined channel 20.

The inclination may be, for example, any angle between 0 and 90 degrees, such as from 1 to 89 degrees, preferably from 5 to 60 degrees, and more preferably from 20 to 45 degrees relative to the horizontal direction.

Furthermore, as shown in Fig. 1, the inclined elevator 100 may comprise a car 10 configured to be moved bidirectionally along the inclined channel 20 between the landing entrances 22 or landings 22, wherein the car 10 may advantageously comprise a battery 16 and a drive unit 13. Still further, as shown in Fig. 1, the inclined elevator 100 may comprise a mover 14 coupled to the car 10 and adapted to move along the longitudinal stator beam 12. The drive unit 13 of the car 10 may be configured to supply electrical power from the battery 16 to a mover 14.

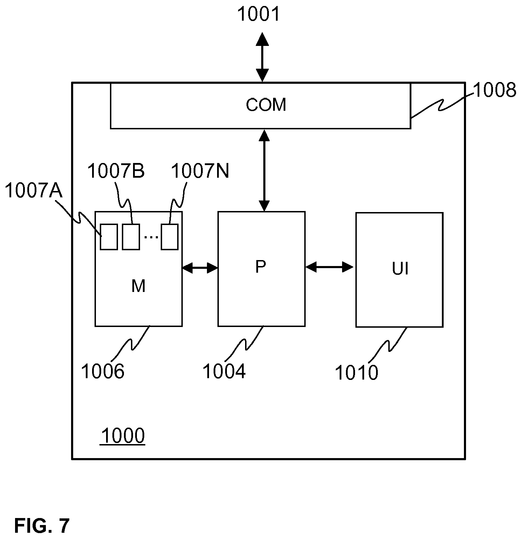

In addition, the inclined elevator 100 may comprise an elevator control unit 1000 which is further shown in and described in connection with Fig. 7. The elevator control unit 1000 may be arranged in one or several of various alternative locations. The elevator control unit 1000 may be arranged, for example, to the support structure or even in the inclined channel 20. The elevator control unit 1000 may be arranged to one of the landing entrances 22 or landings 22, such as to or close to the landing door 24 thereof.

In various embodiments, the car 10 comprises a drive unit controller for controlling the operation of the drive unit 16. The drive unit controller may, preferably, be configured to transmit and/or receive information to/from the elevator control unit 1000, such as wirelessly.

Regarding the moving of the car 10, the inclined elevator 100 preferably comprises an electric linear motor which comprises a mover 14 and the longitudinal stator beam 12. The longitudinal stator beam 12 may have at least two side faces extending in a longitudinal direction X, i.e. a first direction X, of the longitudinal stator beam 12 and comprising ferromagnetic teeth. The ferromagnetic teeth may be comprised in a stator arranged to extend on the side face. Furthermore, the mover 14 may comprise at least two counter faces arranged to face the at least two side faces of the longitudinal stator beam 12, wherein each one of the counter faces may comprise at least one permanent magnet and at least one winding, such as a three-phase winding, to generate a travelling magnetic field along the side faces of the longitudinal stator beam 12 for moving the mover 14 along the longitudinal stator beam 12.

In various embodiments, the electric linear motor may be arranged coupled to a car sling for moving the car 10.

Still further, there may be a maintenance access panel arranged close to the landing door or into the space inside the frame of the landing door of one of the landing entrances 22 or landings 22. The maintenance access panel may comprise the elevator control unit 1000. In addition, the maintenance access panel may comprise a rescue drive unit and a main switch.

In addition, there may be a shaft electrification panel 28 arranged into the inclined channel. The shaft electrification panel may comprise charging means which are arranged to provide electrical power to the car 10 when situated at or near the shaft electrification panel. The shaft electrification panel may also comprise a battery 26. In some embodiments, the shaft electrification panel 28 may comprise electrical conductors, such as cables, coming from the main switch of the maintenance access panel. Furthermore, the shaft electrification panel 28 may comprise power electronics, such as including switches or a frequency converter or an inverter, for converting the electrical power to be suitable for transmitting to and/or utilizing in the car 10. Still further, the shaft electrification panel 28 may comprise a contactor for cutting off electrical power of the power electronics.

Fig. 1 further illustrates optional rollers 11 of the car 10 which may be arranged to roll against the structure 5 defining the inclined channel 20. The rollers 11 may comprise means for guiding the movement of the car 10.

Figure 2 illustrates schematically an elevator 100 according to an embodiment of the present invention. The embodiment of Fig. 2 is similar to one illustrated in Fig. 1, however, the inclined elevator 100 may further comprise a balance weight or counterweight 18. The balance weight or counterweight 18 may, preferably, be coupled to the car 10 or to the mover 14 or to some other point via which it may be arranged to balance the weight of the car 10. Balancing may be, for example, in the range of 40% to 50% of nominal load of the car 10.

The nominal load may be, for example, the weight of the car 10 when it is empty, or the weight of the car 10 when it is empty added with some estimated loading, such as when there are a number of persons inside the car 10, wherein the average weight of the persons may be estimated to be, for example, 70 kilograms. The weight of the balance weight or counterweight 18 may depend on the arrangement via which it has been coupled to the car 10, for instance. The arrangement may comprise, for example, transmission means, such as gears. Thus, the weight of the balance weight or counterweight 18 may vary but causes effectively balancing in the range of 40% to 50% of nominal load of the car 10.

In various embodiments, the balance weight or counterweight 18 may be arranged to move on rails in the inclined channel 20. The rails may extend in the longitudinal direction of the stator beam 12, such as shown in Fig. 2. The balance weight or counterweight 18 may be arranged to move by rollers 19, for instance. Furthermore, the balance weight or counterweight 18 may be arranged adjacent to and/or inside the same housing or structure as the longitudinal stator beam 12.

In Fig. 2, the balance weight or counterweight 18 is coupled to the car 10 by a rope or belt 32. The rope or belt 32 may be arranged to extend around a pulley 30 arranged to a second end portion, preferably to the top end, of the inclined channel 20. Thus, the car 10 and the balance weight or counterweight 18 move in opposite directions. However, in some embodiments, the balance weight or counterweight 18 may be arranged to move in some other direction than in the longitudinal direction of the stator beam 12, such as vertically.

Applicable to embodiments of Figs. 1 and 2, and similar embodiments, the battery 16 of the car 10 may be arranged to be charged during movement of the car 10 or at the landing entrances 22 or landings 22. The charging may be implemented by means of wireless charging or in wired manner.

Still applicable to both embodiments of Figs. 1 and 2, and similar embodiments, there may be arranged wireless data transfer means to transfer data between the car 10 and an elevator control unit 1000.

In addition, the inclined elevator may comprise communication means arranged to one or several of the landing entrances 22 or landings 22, and wirelessly or in wired manner connected to the elevator control unit 1000.

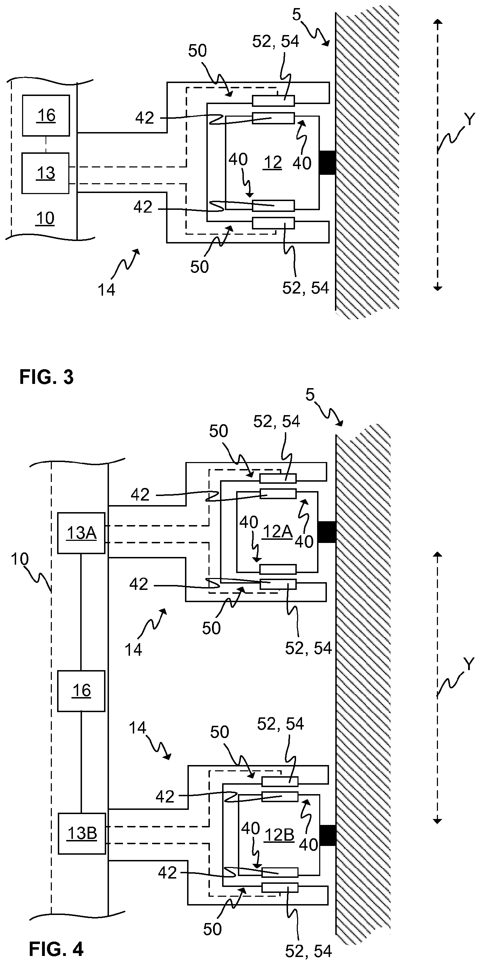

Figure 3 illustrates schematically a mover 14 and a longitudinal stator beam 12 according to an embodiment of the present invention as a cross-sectional view. The mover 14 may have a C- or U-shape. The mover 14 may be coupled to the car 10 and adapted to move along the longitudinal stator beam 12. The mover 14 may comprise at least two counter faces 50 arranged to face the at least two side faces 40 of the longitudinal stator beam 12. Each one of the counter faces 50 may comprise at least one permanent magnet 54 and at least one winding 52, such as a three-phase winding, to generate a travelling magnetic field along the side faces 40 of the longitudinal stator beam 12 for moving the mover 14 along the longitudinal stator beam 12. Furthermore, the drive unit 13 may, preferably, be configured to supply electrical power from the battery 16 to the mover 14. Furthermore, the longitudinal stator beam 12 may have at least two side faces 40 extending in a longitudinal direction X of the longitudinal stator beam 12 and comprising ferromagnetic teeth 42, such as comprised in or forming at least part of, or even completely, the stator.

In Fig. 3, the side of the car 10 facing the stator beam 12 is illustrated as being parallel to a second direction Y which is perpendicular to the longitudinal direction of the stator beam 12. However, the side of car 10 may also be inclined so as to maintain the floor of the car 10 horizontal even though the longitudinal stator beam 12 is inclined. Thus, the floor of the car 10 may be arranged to be horizontal notwithstanding the angle of the inclination of the stator beam 12.

Figure 4 illustrates schematically movers 14 and longitudinal stator beams 12A, 12B according to an embodiment of the present invention as a cross-sectional view. The mover 14 and the longitudinal stator beams 12A, 12B may be substantially similar to ones presented in Fig. 3, however, the inclined elevator 100 may comprise two parallel stator beams 12A, 12B attached at least to the first end portion of the inclined channel 20, and two movers 14 attached to the car 10, wherein the two movers 14 are adapted to move along the two stator beams 12A, 12B, respectively. By utilizing a plurality of stator beams 12, the car 10 can be made more stable as it is supported at more than one point. Furthermore, guide rails having, for example, rollers may be omitted or at least the number of them reduces because the car 10 is supported at various points providing controlled magnetic levitation. Thus, the car 10 can be made more stable without increasing friction due to guide rails and/or surfaces.

In various embodiments, such as related to Figs. 1-4, the mover 14 may be controlled, such as controlling the current injected to the winding(s) thereof, by one drive unit 13 or several drive units 13A, 13B. Furthermore, there may be one or several drives connected to the windings, such that there is a first drive controlling the current/voltage of one winding and a second drive controlling the current/voltage of another winding. By having separate drives for controlling the current/voltage of different windings, an independent control of the windings can be established. This may be utilized, for example, to control the position of the mover 14 with respect to the stator beam 12, such as with respect to tilting, rotating and/or the position of the levitation. Thus, the inclined elevator 100 according to various embodiments may comprise air gap determination means, such as proximity sensors, arranged into the air gap or at least to measure the width of the air gap directly or indirectly.

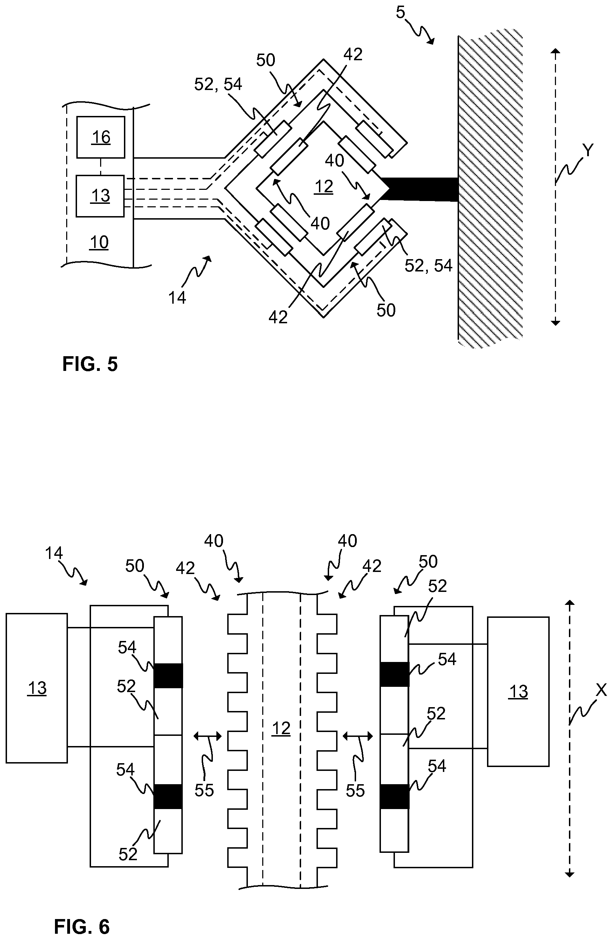

Figure 5 illustrates schematically a mover 14 and a longitudinal stator beam 12 according to an embodiment of the present invention as a cross-sectional view. In Fig. 5, the mover 14 may have a C-shape. The mover 14 may be coupled to the car 10 and adapted to move along the longitudinal stator beam 12. The mover 14 may comprise four counter faces 50 arranged to face four side faces 40 of the longitudinal stator beam 12. Each one of the counter faces 50 may comprise at least one permanent magnet 54 and at least one winding 52, such as a three-phase winding, to generate a travelling magnetic field along the side faces 40 of the longitudinal stator beam 12 for moving the mover 14 along the longitudinal stator beam 12. Furthermore, the drive unit 13 may, preferably, be configured to supply electrical power from the battery 16 to the mover 14. Furthermore, the longitudinal stator beam 12 may have four side faces 40 extending in a longitudinal direction X of the longitudinal stator beam 12 and comprising ferromagnetic teeth 42, such as comprised in or forming at least part of, or even completely, the stator. By having four side faces in the stator beam 12 comprising ferromagnetic teeth 42 and four counter faces 50 comprising permanent magnets and windings provides more controllability of the position of the mover 14 with respect to the stator beam 12.

In some embodiments, the mover 14 may comprise three counter faces 50 and the stator beam 12 three side faces 40 in accordance with various embodiments of the present invention.

Figure 6 illustrates schematically a mover 14 and a longitudinal stator beam 12 according to an embodiment of the present invention as a cross-sectional view. Fig. 6 further illustrates that the stators on a first and a second side face of the stator beam 12, which are on opposite sides of the beam 12, may have an ferromagnetic teeth 42 positioned in the longitudinal direction X. Although not shown in Fig. 6, the stator beam may have side faces on third and fourth sides of the stator beam 12.

There is advantageously arranged an air gap 55 between the mover 14 and the stator beam 12 in order to move the mover 14 along the stator beam 12. The air gap 55 may be controlled by controlling the magnetic levitation which, in turn, is configured to be controlled by injecting current into the windings 52 of the mover 14. Furthermore, there may be air gap determination means, such as proximity sensors, arranged to determine the width of the air gap at least at one position, preferably, at two, three or four position in order to provide feed-back for the control of the magnetic levitation.

The mover or movers 14 in various embodiments may comprise independently controllable windings 52 arranged such as they are displaced with respect to each other in the longitudinal direction X so that also the tilting of the mover may be controlled.

According to an embodiment of the present invention, two pairs of displaced windings 52 in the longitudinal direction X may be arranged in to form one mover 14. By having two pairs of windings, such as shown in Fig. 6, provide the capability to control the tilting of the mover 12 in either direction: clockwise or counter-clockwise.

In various embodiments, the controlling of the mover 14 may be implemented by utilizing known methods of electrical motor control, for example, scalar or vector control based methods. It is known to a person skilled in the art to transform currents by calculation, such as utilizing an algorithm stored in a memory and executed on a computer or a processor, to transform currents from rotating frame of reference to a stationary frame of reference, and vice versa, by utilizing well-known Park and Clarke transformations. Furthermore, it is known to utilize the transformed current components, known as direct component (d-axis component) and quadrature component (q-axis component) for controlling the operation of electric motors. According various embodiments of the present invention, the frame of reference may be fixed with respect to the coordinate system of the mover 14, therefore, rotating when the mover 14 moves along the stator beam 12. This is similar to a typical situation known to a skilled person of fixing the reference frame to rotate with same speed as the rotor in a typical rotating electrical motor. The q-axis component of the input current of the electric linear motor may be utilized to move the mover 14 substantially in the direction along the stator beam 12. However, a surprising effect is achieved by utilizing displaced windings 54 in the longitudinal direction X. The direct (d-axis) component of the motor current may, advantageously, be utilized in controlling the air gap(s) between the mover 14 and the stator beam 12 and, therefore, the position, such as levitation and/or tilting and/or rotation, of the mover 14 with respect to the stator beam 12 according to various embodiments of the present invention.

Figure 7 illustrates schematically an elevator control unit 1000 according to an embodiment of the present invention. External units 1001 may be connected to a communication interface 1008 of the elevator control unit 1000. External unit 1001 may comprise wireless connection or a connection by a wired manner. The communication interface 1008 provides interface for communication with external units 1001 such as the car 10, the linear electric motor, the doors 24 of the landing entrances or floors 22, or the drive unit 13 or drive units 13A, 13B to the elevator control unit 1000. There may also be connecting to the external system, such as a laptop or a handheld device. There may also be a connection to a database of the elevator 100 or an external database including information used in controlling the operation of the elevator 100.

The elevator control unit 1000 may comprise one or more processors 1004, one or more memories 1006 being volatile or non-volatile for storing portions of computer program code 1007A-1007N and any data values and possibly one or more user interface units 1010. The mentioned elements may be communicatively coupled to each other with e.g. an internal bus. The elevator control unit 1000 may be arranged on a single location or a part of the elevator, or its functionality may be implemented by elements in several locations, that is, in distributed manner, for example, having one element in the drive unit 13 and other elements elsewhere in the car 10 or the elevator 100. In case of distributed type of an elevator control unit 1000 appropriate connections must be established between the elements.

The processor 1004 of the elevator control unit 1000 may be at least configured to control the movement of the car 10. The controlling may be implmented by arranging the processor 1004 to execute at least some portion of computer program code 1007A-1007N stored in the memory 1006 causing the processor 1004, and thus the elevator control unit 1000, to implement one or more method steps as described. The processor 1004 is thus arranged to access the memory 1006 and retrieve and store any information therefrom and thereto. For sake of clarity, the processor 1004 herein refers to any unit suitable for processing information and control the operation of the elevator control unit 1000, among other tasks. The operations may also be implemented with a microcontroller solution with embedded software. Similarly, the memory 1006 is not limited to a certain type of memory only, but any memory type suitable for storing the described pieces of information may be applied in the context of the present invention.

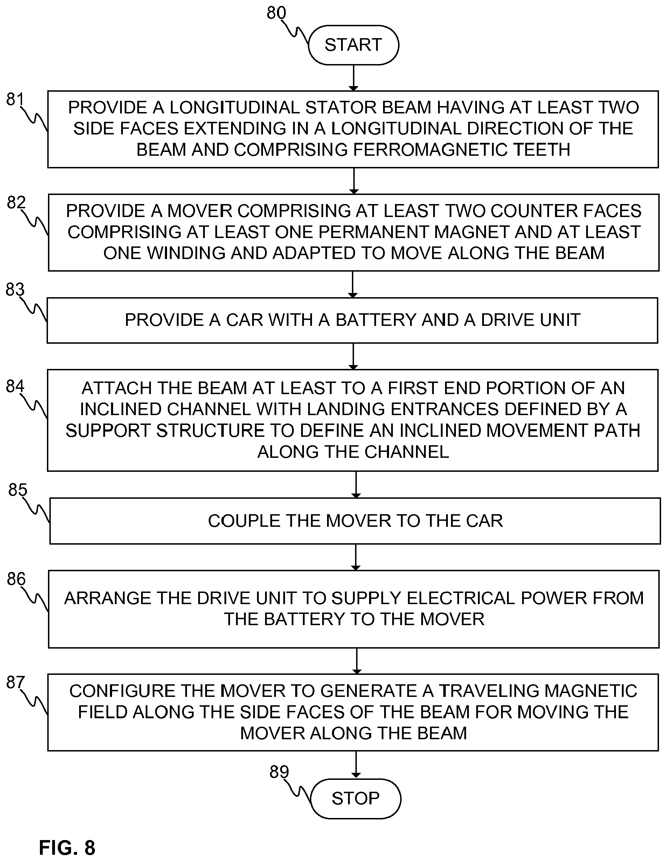

Figure 8 illustrates a flow diagram of a method according to an embodiment of the present invention.

Item 80 may refer to a start-up phase of the method. Suitable equipment and components are obtained and systems assembled and configured for operation.

Item 81 may refer to providing a longitudinal stator beam 12; 12A, 12B having at least two side faces 40 extending in a longitudinal direction X of the longitudinal stator beam 12 and comprising ferromagnetic teeth 42. The provision may be done by obtaining a ready-made stator beam 12 or manufacture the stator beam 12 by utilizing additive or material-removing, such as machining, manufacturing methods.

Item 82 may refer to providing a mover 14 comprising at least two counter faces 50, wherein each one of the counter faces 50 comprises at least one permanent magnet 54 and at least one winding 52, such as a three-phase winding, and adapted to move along the longitudinal stator beam 12; 12A, 12B.

Item 83 may refer to providing a car 10 with a battery 16 and a drive unit 13; 13A, 13B. This may entail equipping car with such elements or obtain a car 10 which already has these.

Item 83 may refer to attaching the longitudinal stator beam 12; 12A, 12B at least to a first end portion of an inclined channel 20, such as the bottom and/or the top of the channel, with landing entrances 22 defined by a support structure 5 to define an inclined movement path 21 along the inclined channel 20.

Item 84 may refer to coupling the mover 14 to the car 10. The coupling may be implemented such as to provide the mover 14 to the car 10 prior to arranging the mover 14 to the stator beam 12. Alternatively, the mover 14 or movers 14 may be first arranged to the stator beam 12 and only after that coupled to the car 10.

Item 85 may refer to arranging the drive unit 13; 13A, 13B to supply electrical power from the battery 16 to the mover 14. This may include providing electrical and/or communication connections therebetween.

Item 86 may refer to configuring the mover 14 to generate a travelling magnetic field along the side faces 40 of the longitudinal stator beam 12; 12A, 12B for moving the mover 14 along the longitudinal stator beam 12; 12A, 12B. This may be implemented by configured the drive unit 13; 13A, 13B to control and supply current into the windings 52 or windings 52 of the mover 14.

Method execution is stopped at step 89.

The specific examples provided in the description given above should not be construed as limiting the applicability and/or the interpretation of the appended claims. Lists and groups of examples provided in the description given above are not exhaustive unless otherwise explicitly stated.

## Claims

1. An inclined elevator (100) comprising
a support structure (5) defining an inclined channel (20), such as an inclined shaft in a building, with landing entrances (22), **characterized in that** the inclined elevator (100) comprises:
a longitudinal stator beam (12; 12A, 12B) attached at least to a first end portion of the inclined channel (20) to define an inclined movement path (21) along the inclined channel (20);
a car (10) configured to be moved bidirectionally along the inclined channel (20) between the landing entrances (22), wherein the car (10) comprises a battery (16) and a drive unit (13; 13A, 13B); and
a mover (14) coupled to the car (10) and adapted to move along the longitudinal stator beam (12; 12A, 12B), the mover (14) comprising at least one winding (52), such as a three-phase winding, to generate a travelling magnetic field along at least one side face (40) of the longitudinal stator beam (12; 12A, 12B) for moving the mover (14) along the longitudinal stator beam (12; 12A, 12B); wherein
the drive unit (13; 13A, 13B) is configured to supply electrical power from the battery (16) to the mover (14).

2. The inclined elevator (100) of claim 1, wherein the longitudinal stator beam (12; 12A, 12B) has at least two side faces (40) extending in a longitudinal direction (X) of the longitudinal stator beam (12) and comprising ferromagnetic teeth (42); and wherein the mover (14) comprises at least two counter faces (50) arranged to face the at least two side faces (40) of the longitudinal stator beam (12; 12A, 12B), wherein each one of the counter faces (50) comprises at least one permanent magnet (54) and the at least one winding (52), such as a three-phase winding, to generate a travelling magnetic field along the side faces (40) of the longitudinal stator beam (12; 12A, 12B) for moving the mover (14) along the longitudinal stator beam (12; 12A, 12B).

3. The inclined elevator (100) of claim 1 or 2, wherein the longitudinal stator beam (12; 12A, 12B) having four side faces (40) extending in the longitudinal direction (X) of the longitudinal stator beam (12) and comprising ferromagnetic teeth (42), and the mover (14) comprises four counter faces (50) arranged to face the four side faces (40) of the longitudinal stator beam (12; 12A, 12B), wherein each one of the counter faces (50) comprises at least one permanent magnet (54) and at least one winding (52), such as a three-phase winding, to generate a travelling magnetic field along the side faces (40) of the longitudinal stator beam (12; 12A, 12B) for moving the mover (14) along the longitudinal stator beam (12; 12A, 12B).

4. The inclined elevator (100) of any one of claims 1-3, comprising two parallel stator beams (12A, 12B) attached at least to the first end portion of the inclined channel (20), and two movers (14) attached to the car (10), wherein the two movers (14) are adapted to move along the two stator beams (12A, 12B), respectively.

5. The inclined elevator (100) of any one of the preceding claims, comprising a balance weight or counterweight (18) coupled to the car (10) for balancing the car (10).

6. The inclined elevator (100) of claim 5, wherein the balance weight or counterweight (18) is arranged to be in a range of 40% to 50% of a nominal load of the car (10).

7. The inclined elevator (100) of any one of the preceding claims, wherein the longitudinal stator beam (12; 12A, 12B) is or beams (12; 12A, 12B) are arranged in an angle of 10-45 relative to a horizontal direction.

8. The inclined elevator (100) of any one of the preceding claims, wherein the mover (14) is or the movers (14) are coupled to a car sling for moving the car (10).

9. A method for manufacturing an inclined elevator (100), **characterized in that,** the method comprises:
- providing a longitudinal stator beam (12; 12A, 12B);
- providing a mover (14) comprising at least one winding (52), such as a three-phase winding, and adapted to move along the longitudinal stator beam (12; 12A, 12B);
- providing a car (10) with a battery (16) and a drive unit (13; 13A, 13B);
- attaching the longitudinal stator beam (12; 12A, 12B) at least to a first end portion of an inclined channel (20) with landing entrances (22) defined by a support structure (5) to define an inclined movement path (21) along the inclined channel (20);
- coupling the mover (14) to the car (10);
- arranging the drive unit (13; 13A, 13B) to supply electrical power from the battery (16) to the mover (14); and
- configuring the mover (14) to generate a travelling magnetic field along the side faces (40) of the longitudinal stator beam (12; 12A, 12B) for moving the mover (14) along the longitudinal stator beam (12; 12A, 12B).

10. The method of claim 9, wherein the longitudinal stator beam (12; 12A, 12B) has at least two side faces (40) extending in a longitudinal direction (X) of the longitudinal stator beam (12) and comprising ferromagnetic teeth (42).

11. The method of claim 9 or 10, wherein the mover (14) comprises at least two counter faces (50), wherein each one of the counter faces (50) comprises at least one permanent magnet (54).
